# EUROPEAN PATENT SPECIFICATION

(11) **EP 2 622 593 B1**
(45) Date of publication and mention of the grant of the patent: **22.04.2015**
(21) Application number: 11763626.6
(22) Date of filing: 22.09.2011
(51) Int. Cl.: G09B 23/28

(54) **CHEST COMPRESSION MANIKIN**
PUPPE FÜR THORAXKOMPRESSION
MANNEQUIN POUR ENTRAÎNEMENT AUX COMPRESSIONS THORACIQUES

(30) Priority: 29.09.2010 NO 20101353
(43) Date of publication of application: 07.08.2013
(73) Proprietor: Laerdal Medical AS, 4002 Stavanger (NO)
(72) Inventor: IANKE, Jens Petter, 4050 Sola (NO); HETLAND, Eirik, 4016 Stavanger (NO); ANGLEVIK, Helge, 4085 Hundvåg (NO)
(74) Representative: Protector IP Consultants AS
(86) International application number: PCT/EP2011/066490
(87) International publication number: WO 2012/041759

(56) References cited:
- EP-A1- 1 136 970
- US-A- 4 850 876
- US-A1- 2004 058 305

## Description

The present invention relates to a chest compression training arrangement, particularly suited for use with a manikin adapted for training of resuscitation involving chest compression.

### Background

Several manikins for practising cardiopulmonary resuscitation are known in the prior art. Many of them comprise a chest portion with flexible and elastic properties which are adapted to simulate the chest stiffness of a real person. To obtain such characteristics various approaches have been used. In particular, some manikins have chest stiffness properties which can be adjusted. Thus, the chest stiffness of a large adult, as well as the chest stiffness of a small person, such as a child, can be simulated by appropriate adjustment.

Patent publication US 3209469 describes such a manikin with adaptable chest stiffness. Simulating the sternum is a chest plate which is supported in a movable (or chest compressible) fashion. To provide the flexibility, the chest plate is supported with a number of springs extending substantially in the horizontal plane and beyond the plate at two opposite ends of the plate. These springs are pulled out during compression. In addition, larger springs are provided between a base (back) of the manikin and the chest plate. These springs are compressed during chest compression. To adapt the chest stiffness, different springs having suitable properties are mounted in the manikin.

EP560440 A1 describes another manikin with compressible chest portion. This manikin has one spring to provide for the counter force during compression.

European patent application publication EP1136970 A1 describes another manikin for resuscitation training. In the chest portion of this design, two plates are hingedly mounted and extend towards each other with an overlap at their ends. Below one of the plates there is arranged an elastically deformable element to provide the flexible resistance to moving the plates when performing heart massage. To adjust this resistance, the deformable element is replaced with an element having the desired characteristics.

Somewhat similar to EP1136970 is US4850876 which describes hinged plates which can pivot with respect to back plates, wherein a resilient member (a ring) is arranged between the plates and the back plates. The resilient member is replaceable in order to adjust the counter force of the chest compression movement.

Yet another manikin for training cardiopulmonary resuscitation is disclosed in patent application publication ES2331557. This manikin also discloses a spring solution. In addition it comprises a handle (8) for adjusting the possible compression length of the chest.

Many of the solutions of the prior art are characterized in that one needs to replace an element inside the chest of the manikin in order to adjust the counter force of the chest compression movement. Other solutions based on spring or springs employ adjustment of the possible compression length.

Another desired feature of a chest compression training arrangement is that the counterforce from the chest part increases when it is pushed down. This feature resembles the characteristics of a human body. To obtain such functionality it is known to employ a progressive spring. It is however advantageous to avoid such a solution, as progressive springs in particular will make noise when compressed. Even linear springs will normally make undesired noise, as they slide against guiding elements when they are compressed and decompressed.

It is an object of the present invention to provide a chest compression training arrangement with realistic compression characteristics. Preferably, compression and decompression should be without any unnatural mechanic noise.

### The invention

According to the invention, there is provided a chest compression training arrangement comprising an upper plate and a base, wherein at least a part of the upper plate is adapted to be moved towards said base when a force is exerted onto it. The training arrangement further comprises a flexible beam onto which said force is transferred from the upper plate, which beam is adapted to curve when force is exerted onto it at a distance from a beam support supporting the flexible beam. The flexible beam can be supported by one or more beam supports, and will curve when force is applied onto it without a rigid support below it at the point where the force is applied. Of course, for the flexible beam to curve it must be supported in a way that makes curving possible. When the compression force is relieved, the flexible beam will move back to its original position.

With the term flexible beam is meant any elongated structure which can curve elastically when exposed to a force crosswise to its elongated extension. Thus, the beam can for instance be in the form of a plate or a rod.

In an embodiment of the present invention, the training arrangement comprises a movable beam support adapted to be positioned at various positions along the extension of the flexible beam. Of course, such positions do not need to be along the entire extension of flexible beam. With such an embodiment it is possible to adjust the compression stiffness of the training arrangement by moving the beam support.

Preferably the movable beam support has a curved face supporting the beam, so that the interface between the beam and the movable beam support moves along said curved face as the beam is bent. This feature contributes in making the stiffness of the training arrangement increase along with increased compression force when the flexible beam curves. This resembles the behaviour of a chest of a mammal, such as a human.

In an advantageous embodiment of the present invention, the movable beam support is linked to a movable handle which can be reached from outside the training arrangement. When arranged inside or in combination with a manikin resembling a torso, the movable handle can be reached manually in a slot arranged on the back side of the manikin.

In one embodiment of the invention, the flexible beam has a plate shape and a narrow section adapted to bend and to be supported by said movable support. In this way the flexible beam will have a section that will curve more than other portions of it.

Preferably, the chest compression training arrangement can further comprise an elastic compressible element arranged between the upper plate and the base, in such a position that it will be compressed when the upper plate is moved towards the base. Preferably the compressible element can be supported by the flexible beam, thereby transmitting compression force from the upper plate to the flexible beam while simultaneously being compressed. Other configurations are however also feasible, as will appear from the example description.

Advantageously, the compressible element has a base portion and a compliant portion. The compliant portion advantageously exhibits a smaller cross section than the base portion in the plane crosswise to the direction of compression. The compliant portion and the base portion are both compressible, however to different degrees.

Preferably said cross sections of both the base portion and the compliant portion have a substantially rectangular shape, wherein the cross section of the compliant portion has one dimension substantially equal to the corresponding dimension of the base portion and has one dimension considerably smaller than the corresponding dimension of base portion. Furthermore, the compressible element can have a portion which exhibits a continuously changing cross section area along the direction of the compression force.

### Example

Having described the invention in general terms above, a more detailed example of embodiment will be given below with reference to the drawings, in which
- Fig. 1: is a side cross section view of a chest compression training arrangement according to the invention in a non-compressed mode and arranged within a manikin;
- Fig. 2: is the arrangement in Fig. 1 in a compressed mode;
- Fig. 3: is a perspective view of the torso of a manikin with the arrangement according to the invention arranged inside;
- Fig. 4: is the same perspective view as in Fig. 3, with some elements removed;
- Fig. 5: is a perspective view of the torso shown in Fig. 3, seen from the back side;
- Fig. 6: is a side cross section view as in Fig. 1, wherein the arrangement has been adjusted to exhibit a stiffer compression response;
- Fig. 7: is a diagram with force-depth curves which show relationships between applied force and compression depth for various settings of the arrangement;
- Fig. 8: is a perspective view of a flexible beam;
- Fig. 9: is a side view of an alternative embodiment according to the present invention; and
- Fig. 10: is a side view of yet another embodiment according to the present invention.

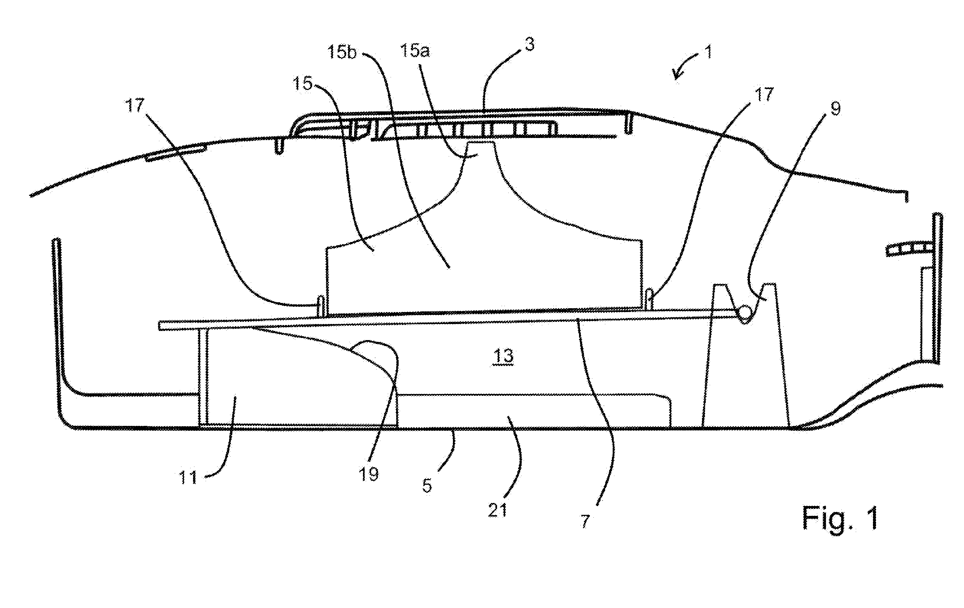

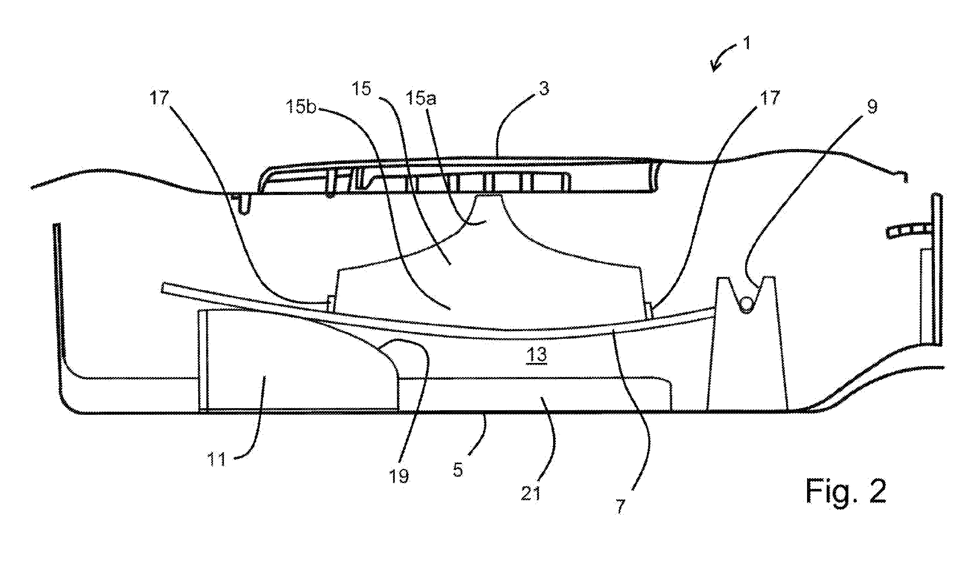

Fig. 1 shows an embodiment of the chest compression training arrangement according to the present invention. In this embodiment, the training arrangement is arranged inside the torso 1 of a manikin. The training arrangement comprises an upper plate 3 and a base 5. In this embodiment the upper plate 3 is a chest plate of the torso 1, adapted to be compressed towards the base 5 during heart compression training. In Fig. 2 the upper plate 3 is shown in a compressed state.

It is now referred to Fig. 1 and Fig. 2. The training arrangement further comprises a flexible beam 7. The flexible beam 7 is hingedly arranged in a first beam support 9 and rests on a second beam support 11 at its opposite end. Between the first beam support 9 and the second beam support 11 there is a void 13 below the beam 7, into which it can curve when the training arrangement is compressed, as illustrated in Fig. 2.

For transferring the compression force from the upper plate 3 to the flexible beam 7 there is arranged an elastic compressible element 15 between the upper plate 3 and the flexible beam 7. The compressible element 15 rests on the flexible beam 7 and is held in place by a set of retainer elements 17 to prevent mutual movement between the compressible element 15 and the flexible beam 7.

In an alternative embodiment, the elastic compressible element 15 could be replaced by a stiff component, such as a non-compressible plastic element.

However, in the embodiment described with reference to Fig. 1 and Fig. 2, the elastic compressible element 15 will be compressed by compressive forces between said upper plate 3 and the flexible beam 7. Thus, when force is applied onto the upper plate 3 of the training arrangement, the flexible beam 7 will curve downwards into the void 13 and the compressible element 15 will be compressed. This combination makes it possible to achieve a compressive response of the training arrangement which is similar to that of a human being. In particular, the compressive element 15 of the described embodiment comprises foam and preferably polyurethane foam. A particular advantageous feature of such a foam material is the hysteresis it exhibits when compressed and decompressed. That is, it will exhibit some slowness when returning to its original position. Furthermore, when compressed in a rapid fashion, it will produce more resistance to the compression than when it is compressed slowly. These features correspond to the characteristics of a real human chest.

Furthermore, as illustrated in Fig. 1 and Fig. 2, the compressible element 15 has a compliant portion 15a with a small cross section and a base portion 15b with a large cross section. Thus, when compressed, the compliant portion 15a will be compressed more than the base portion 15b due to its smaller cross section. Moreover, the compressed portions of the compressible element 15 will become less compressible, thus distributing the compression throughout the compressible element 15 when this is compressed. This results in a force-compression diagram for the compressible element 15 which changes from a small inclination at low compression force, to larger inclination at higher compression force. This is in contrast to the force-compression diagram for a linear spring.

The described compressible element 15 also exhibits a portion having continuously changing cross section area along the direction of the compression force.

As mentioned above, at one end the flexible beam 7 rests on a second beam support 11. The second beam support 11 exhibits a support face 19 with a curved shape, onto which the flexible beam 7 rests. The support face 19 is substantially horizontal at its most elevated part and curves downwards in the direction of the first beam support 9. Thus, as appears by studying Fig. 1 and Fig. 2, the contact point between the flexible beam 7 and the support face 19 moves towards the first beam support 9 when the flexible beam 7 curves. Thus, as the compression force increases, a decreasing portion of the flexible beam 7 will be curved. This feature makes the compression response of the flexible beam 7 become stiffer with increase of compression force.

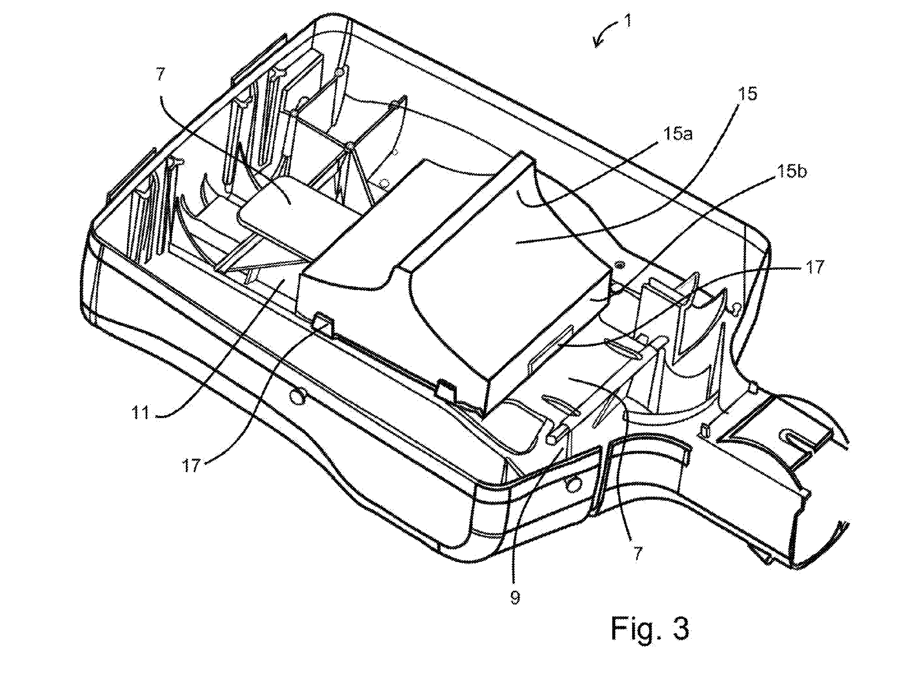

Fig. 3 shows a perspective view of the chest compression training arrangement according to the invention integrated with the torso 1 of the manikin. In this drawing the upper plate 3 has been removed in order to see the components below it. As can be seen from Fig. 3, the compressible element 15 has a constant dimension in one direction, and changing direction in the crosswise direction along the direction of the compression. Its uppermost part exhibits a narrow rectangular face which abuts the lower side of the upper plate 3. One can also see how the first beam support 9 is a hinged support comprising two support structures extending up from the back side of the torso 1. It should be noticed that the compressible element 15 could be rotated 90 degrees with respect to the flexible beam 7 and still exhibit the desired compression characteristics.

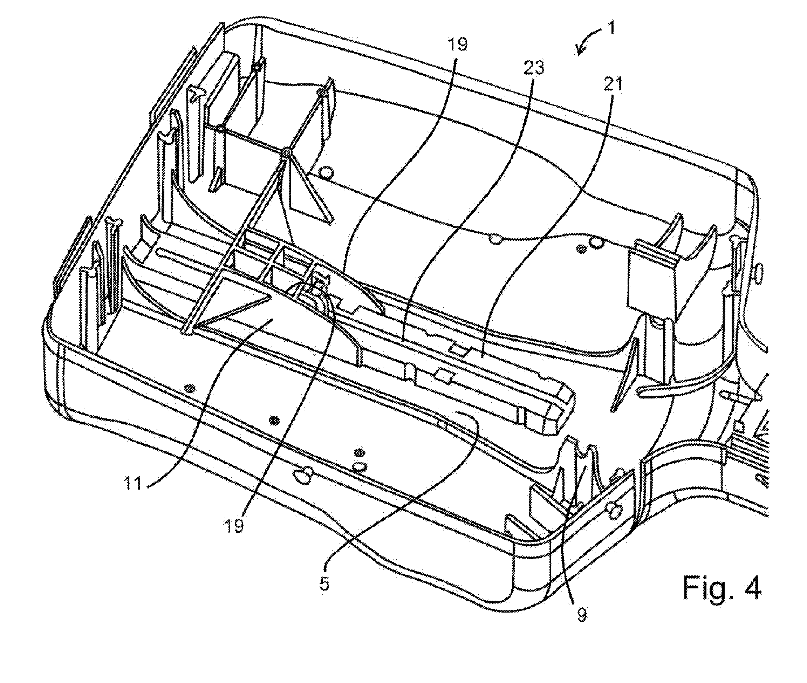

Fig. 4 shows substantially the same perspective view as in Fig. 3, however with the compressible element 15 and the flexible beam 7 removed. As will be described in the following, the second beam support 11 is adapted to be moved so that it can adapt positions with different distances to the first beam support 9. Extending upwards from the base 5 is a guiding rail 21 which guides the second beam support 11 when moving towards or away from the first beam support 9.

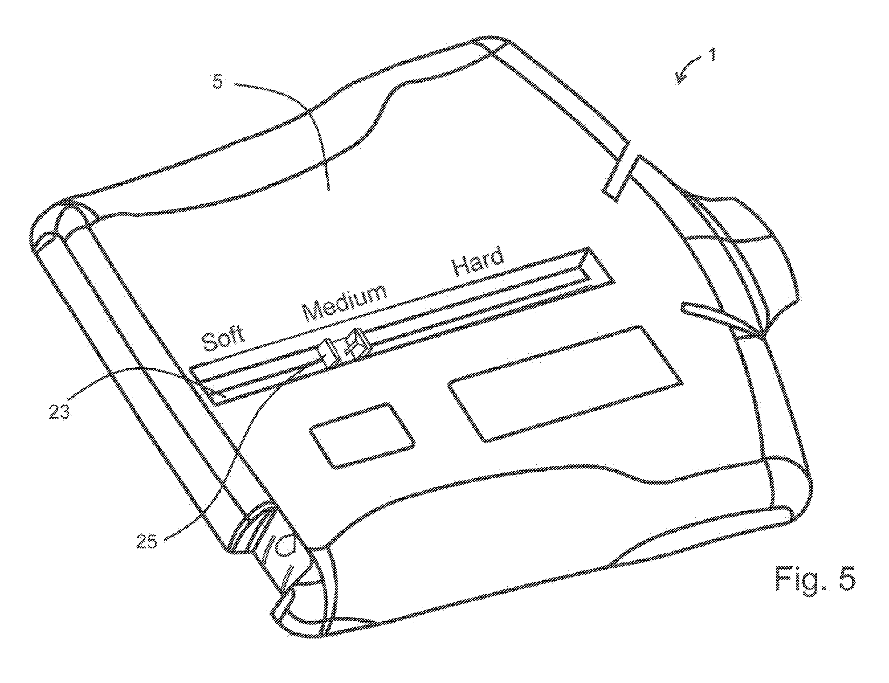

The guiding rail 21 has a slot 23 through which a handle 25 from the movable second beam support 21 extends. Fig. 5 shows the back side of the manikin and illustrates how the handle 25 extends through the slot 23 and can be reached by hand for movement of the second beam support 11.

Preferably there will be notches (not shown) or the like in the guiding rail 21 at three different positions for facilitating positioning of the second beam support 11 at exactly these three positions. This measure ensures repeatability with regard to such adjustment of the second beam support 11. Preferably the back side of the manikin can also be marked such as with the terms "Soft", "Medium", and "Hard", as illustrated in Fig. 5.

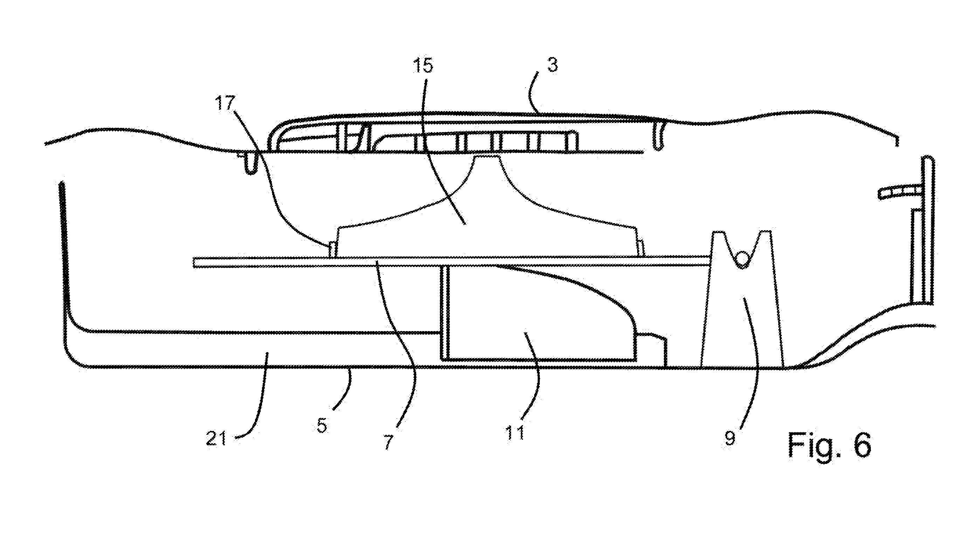

Fig. 6 is a side view of the arrangement shown in Fig. 1 and Fig. 2, where the second beam support 11 has been moved into a position directly below the elastic compressible element 15. When the movable second beam support 11 is in this position, the arrangement exhibits its stiffest mode. This is because the flexible beam 7 will substantially not be curved by the compression force. In this position only the compressible element 15 will yield for the compression force. The second beam support 11 can thus be arranged in an arbitrary position along the guiding rail 21, thereby adjusting the compression response of the compression training arrangement arbitrarily between a stiffest mode (Fig. 6) and a most compressible mode (Fig. 1).

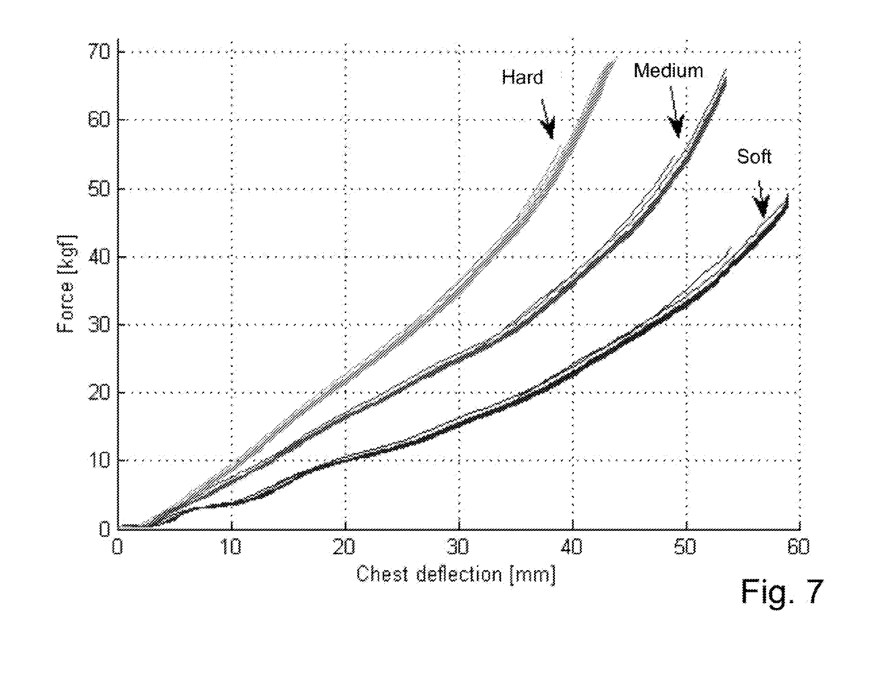

Fig. 7 is a force-compression diagram showing the curves for the three positions "Soft", "Medium", and "Hard", of the described chest compression training arrangement. The three positions correspond to those discussed with reference to Fig. 5. As is evident from all three curves, the training arrangement becomes stiffer with increased force, as is the case of a real human chest. In addition, the "Hard" curve is steeper than the other two, and so on.

It would of course be possible to divide the movable path of the second beam support 11 into more than three marked positions. However it has appeared that it is difficult for the user to feel a difference between two neighbouring steps if said movable path is divided into more than three positions.

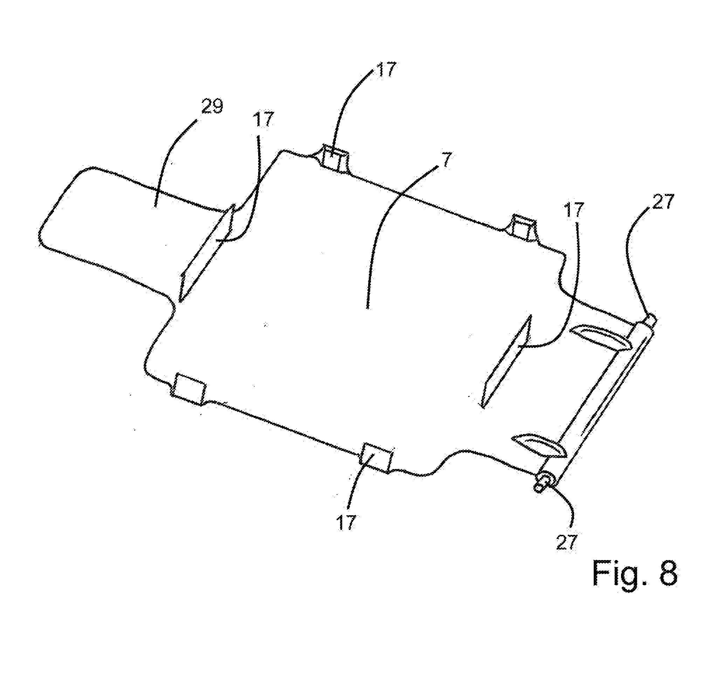

Fig. 8 is a perspective view of an advantageous shape of the flexible beam 7 with its retainer elements 17 for retaining the elastic compressible element 15 in position on the flexible beam 7. At one end the flexible beam 7 has two stub shafts 27 for hinged engagement with the first beam support 9. At its opposite end the flexible beam 7 has a narrow section 29. The narrow section 29 will be more flexible than the rest of the flexible beam 7.

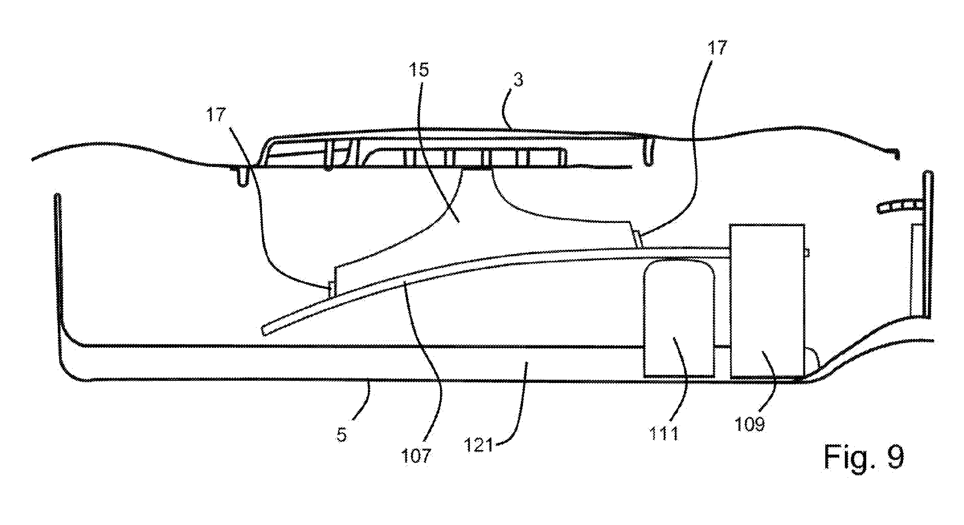

Fig. 9 illustrates an alternative embodiment of a chest compression training arrangement according to the present invention. In this embodiment the flexible beam 107 is fixed to a first beam support 109 at its one end. In addition, a movable second support 111 is arranged to be moved along a guiding rail 121 in order to take various positions under the flexible beam 107. When the second beam support 111 is arranged close to the first beam support 109, the flexible beam 107 will yield for compression forces without much resistance. When the second beam support 111 is arranged directly below the compressible element 15, the flexible beam 107 will substantially not curve. One can also imagine the setup of Fig. 9 without the second beam support 111.

In yet an alternative embodiment one could imagine a second beam (not shown) being inserted in parallel with and just below the shown flexible beam 107, in order to make a stiffer assembly. Adjusting the length of insertion would thus adjust the stiffness of the training apparatus.

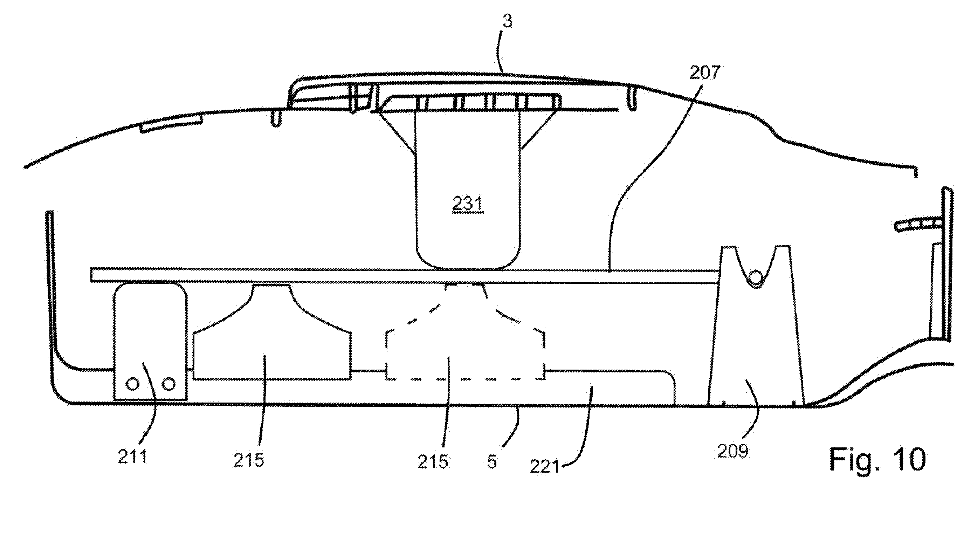

Another possible embodiment of the chest compression training arrangement is shown in Fig. 10. In this embodiment the flexible compressible element 215 is arranged below the flexible beam 207. The flexible beam 207 is supported by a first beam support 209 and a second beam support 211 (although one support actually would suffice). Between the first and second beam support 209, 211 the compressible element 215 is arranged in a movable manner. In order to transfer compression forces from the upper plate 3 to the flexible beam 207, a rigid force transmission element 231 extends downwards from the upper plate 3 and abuts the flexible beam 207. For illustration purpose, the compressible element 215 is shown in two positions with a solid line and a dashed line. One should note that in this embodiment, it will always be possible to curve the flexible beam 207 and the stiffness of the training arrangement depends on the position of the compressible element 215.

Although the chest compression training arrangement has been described above in combination with a manikin, it should be noted that the arrangement is not restricted to such use. For instance, it could be a stand-alone training arrangement without the appearance of a body or torso.

## Claims

1. Chest compression training arrangement comprising an upper plate (3) and a base (5), wherein at least a part of the upper plate (3) is adapted to be moved towards said base (5) when a force is exerted onto said upper plate, **characterized in that** the arrangement further comprises a flexible beam (7, 207) onto which said force is transferred from the upper plate (3), which flexible beam (7, 207) is adapted to curve when force is exerted onto it at a distance from a beam support (9, 11, 109, 111, 209, 211) supporting the flexible beam (7, 207).

2. Chest compression training arrangement according to claim 1, **characterized in that** it comprises a movable beam support (11, 111) adapted to be positioned at various positions along the extension of the flexible beam (7, 207).

3. Chest compression training arrangement according to claim 2, **characterized in that** the movable beam support (11) has a curved face (19) supporting the flexible beam (7), so that the interface between the flexible beam (7) and the movable beam support (11) moves along said curved face (19) as the flexible beam is bent.

4. Chest compression training arrangement according to claim 2 or 3, **characterized in that** the movable beam support (11, 111) is linked to a movable handle (25) which can be reached from outside the training arrangement.

5. Chest compression training arrangement according to claim 2 or 3, **characterized in that** the flexible beam (7, 207) has a plate shape and a narrow section (29) adapted to bend and to be supported by said movable support (11, 111).

6. Chest compression training arrangement according to one of the preceding claims, **characterized in that** it further comprises an elastic compressible element (15, 215) arranged between the upper plate (3) and the base (5), in such a position that it will be compressed when the upper plate is moved towards the base.

7. Chest compression training arrangement according to claim 6, **characterized in that** the compressible element (15, 215) has a base portion (15b) and a compliant portion (15a), wherein the compliant portion exhibits a smaller cross section than the base portion in the plane crosswise to the direction of compression.

8. Chest compression training arrangement according to claim 6, **characterized in that** said cross sections of both the base portion (15b) and the compliant portion (15a) have a substantially rectangular shape, wherein the cross section of the compliant portion has one dimension substantially equal to the corresponding dimension of the base portion and has one dimension considerably smaller than the corresponding dimension of base portion.

9. Chest compression training arrangement according to claim 6, 7 or 8, **characterized in that** the compressible element (15, 215) has a portion which exhibits a continuously changing cross section area along the direction of the compression force.

10. Chest compression training arrangement according to any one of the preceding claims, **characterized in that** it is integrated with a manikin resembling a human body or human torso.

## Patentansprüche

1. Brustkompressionsübungsanordnung, umfassend eine obere Platte (3) und eine Basis (5), wobei zumindest ein Teil der oberen Platte (3) dazu geeignet ist, um zur Basis (5) bewegt zu werden, wenn eine Kraft auf die obere Platte ausgeübt wird, **dadurch gekennzeichnet, dass** die Anordnung weiterhin einen flexiblen Träger (7, 207) umfasst, auf den die Kraft von der oberen Platte (3) übertragen wird, wobei der flexible Träger dazu geeignet ist, sich zu biegen, wenn Kraft darauf in einem Abstand einer Trägerabstützung (9, 11, 109, 111, 209, 211) ausgeübt wird, welche den flexiblen Träger (7, 207) abstützt.

2. Brustkompressionsübungsanordnung nach Anspruch 1, **dadurch gekennzeichnet, dass** sie eine bewegliche Trägerabstützung (11, 111) umfasst, welche dazu geeignet ist, an verschiedenen Positionen entlang der Längserstreckung des flexiblen Trägers (7, 207) positioniert zu werden.

3. Brustkompressionsübungsanordnung nach Anspruch 2, **dadurch gekennzeichnet, dass** die bewegliche Trägerabstützung (11) eine gekrümmte Fläche (19) hat, welche den flexiblen Träger (7) abstützt, so dass die Grenzfläche zwischen dem flexiblen Träger (7) und der beweglichen Trägerabstützung (11) sich entlang der gekrümmten Fläche (19) bewegt, wenn der flexible Träger gebogen wird.

4. Brustkompressionsübungsanordnung nach Anspruch 2 oder 3, **dadurch gekennzeichnet, dass** die bewegliche Trägerabstützung (11, 111) mit einem beweglichen Griff (25) verbunden ist, welcher von außerhalb der Übungsanordnung erreichbar ist.

5. Brustkompressionsübungsanordnung nach Anspruch 2 oder 3, **dadurch gekennzeichnet, dass** der flexible Träger (7, 207) plattenförmig ist und einen schmalen Abschnitt (29) hat, welcher dazu geeignet ist, sich zu biegen und durch die bewegliche Abstützung (11, 111) abgestützt zu werden.

6. Brustkompressionsübungsanordnung nach einem der vorhergehenden Ansprüche, **dadurch gekennzeichnet, dass** sie weiterhin ein elastisch komprimierbares Element (15, 215) umfasst, welches zwischen der oberen Platte (3) und der Basis (5) an einer solchen Stelle angeordnet ist, dass es komprimiert wird, wenn die obere Platte zur Basis hin bewegt wird.

7. Brustkompressionsübungsanordnung nach Anspruch 6, **dadurch gekennzeichnet, dass** das komprimierbare Element (15, 215) einen Basisabschnitt (15b) und einen nachgebenden Abschnitt (15a) hat, wobei der nachgebende Abschnitt einen kleineren Querschnitt als der Basisabschnitt in der Ebene senkrecht zur Kompressionsrichtung aufweist.

8. Brustkompressionsübungsanordnung nach Anspruch 6, **dadurch gekennzeichnet, dass** die Querschnitte der beiden, des Basisabschnitts (15b) und des nachgebenden Abschnitts (15a), eine im Wesentlichen rechteckige Form aufweisen, wobei der Querschnitt des nachgebenden Abschnitts eine Dimension hat, welche im Wesentlichen gleich der korrespondierenden Dimension des Basisabschnitts ist, und eine Dimension hat, die wesentlich kleiner als die korrespondierende Dimension des Basisabschnitts ist.

9. Brustkompressionsübungsanordnung nach Anspruch 6, 7 oder 8, **dadurch gekennzeichnet, dass** das komprimierbare Element (15, 215) einen Abschnitt hat, welcher eine sich kontinuierlich ändernde Querschnittsfläche entlang der Richtung der Kompressionskraft aufweist.

10. Brustkompressionsübungsanordnung nach einem der vorhergehenden Ansprüche, **dadurch gekennzeichnet, dass** sie in eine Puppe integriert ist, welche einem menschlichen Körper oder menschlichen Torso ähnelt.

## Revendications

1. Agencement d'entraînement aux compressions thoraciques comprenant une plaque supérieure (3) et une base (5), dans lequel au moins une partie de la plaque supérieure (3) est apte à être déplacée en direction de ladite base (5) lorsqu'une force est exercée sur ladite plaque supérieure, **caractérisé en ce que** l'agencement comprend en outre une poutre flexible (7, 207) à laquelle ladite force est transférée à partir de la plaque supérieure (3), ladite poutre flexible (7, 207) étant apte à s'incurver lorsqu'une force est exercée sur elle à une distance d'une poutre de support (9, 11, 109, 111, 209, 211) supportant la poutre flexible (7, 207).

2. Agencement d'entraînement aux compressions thoraciques selon la revendication 1, **caractérisé en ce qu'**il comprend un support de poutre mobile (11, 111) apte à être positionné en différentes positions le long de l'extension de la poutre flexible (7, 207).

3. Agencement d'entraînement aux compressions thoraciques selon la revendication 2, **caractérisé en ce que** le support de poutre mobile (11) présente une face incurvée (19) supportant la poutre flexible (7), de telle manière que l'interface entre la poutre flexible (7) et le support de poutre mobile (11) se déplace le long de ladite face incurvée (19) lorsque la poutre flexible est fléchie.

4. Agencement d'entraînement aux compressions thoraciques selon la revendication 2 ou 3, **caractérisé en ce que** le support de poutre mobile (11, 111) est relié à une poignée mobile (25) qui peut être atteinte depuis l'extérieur de l'agencement d'entraînement.

5. Agencement d'entraînement aux compressions thoraciques selon la revendication 2 ou 3, **caractérisé en ce que** la poutre flexible (7, 207) présente une forme de plaque et une section étroite (29) apte à fléchir et à être supportée par ledit support mobile (11, 111).

6. Agencement d'entraînement aux compressions thoraciques selon l'une quelconque des revendications précédentes, **caractérisé en ce qu'**il comprend en outre un élément compressible élastique (15, 215) agencé entre la plaque supérieure (3) et la base (5), dans une position telle qu'il soit comprimé lorsque la plaque supérieure est déplacée en direction de la base.

7. Agencement d'entraînement aux compressions thoraciques selon la revendication 6, **caractérisé en ce que** l'élément compressible (15, 215) comporte une partie de base (15b) et une partie souple (15a), dans lequel la partie souple présente une section transversale plus petite que la partie de base dans le plan transversal à la direction de compression.

8. Agencement d'entraînement aux compressions thoraciques selon la revendication 6, **caractérisé en ce que** lesdites sections transversales tant de la partie de base (15b) que de la partie souple (15a) présentent une forme sensiblement rectangulaire, dans lequel la section transversale de la partie souple présente une dimension sensiblement égale à la dimension correspondante de la partie de base et présente une dimension considérablement plus petite que la dimension correspondante de la partie de base.

9. Agencement d'entraînement aux compressions thoraciques selon la revendication 6, 7 ou 8, **caractérisé en ce que** l'élément compressible (15, 215) comporte une partie qui présente une section transversale qui change en continu le long de la direction de la force de compression.

10. Agencement d'entraînement aux compressions thoraciques selon l'une quelconque des revendications précédentes, **caractérisé en ce qu'**il est intégré dans un mannequin ayant l'apparence d'un corps humain ou d'un torse humain.
